# EUROPÄISCHE PATENTSCHRIFT

(11) **EP 1 260 835 B1**
(45) Veröffentlichungstag und Bekanntmachung des Hinweises auf die Patenterteilung: **19.07.2006**
(21) Anmeldenummer: 02011010.2
(22) Anmeldetag: 17.05.2002
(51) Int. Cl.: G02B 5/20

(54) **Ultraviolettlicht-Abschwächungsfilter**
UV attenuation filter
Filtre pour l'atténuation de rayons ultraviolets

(30) Priorität: 22.05.2001 DE 10127225
(43) Veröffentlichungstag der Anmeldung: 27.11.2002
(73) Patentinhaber: Carl Zeiss SMT AG, 73446 Oberkochen (DE)
(72) Erfinder: Weigl, Bernhard, 89555 Steinheim (DE); Paul, Hans-Jochen, 73431 Aalen (DE); Eva, Eric, 73432 Aalen (DE)
(74) Vertreter: Muschik, Thomas

(56) Entgegenhaltungen:
- DE-B- 1 157 002
- DE-C- 975 553
- GB-A- 1 178 707
- US-A- 2 675 740
- US-A- 5 493 442
- US-A- 5 591 529

## Beschreibung

Die Erfindung betrifft einen Abschwächungsfilter zur definierten Abschwächung der Lichtintensität von transmittiertem Ultraviolettlicht aus einem vorgegebenen Wellenlängenbereich gemäß einer vorgebbaren räumlichen Verteilung der Lichtdurchlässigkeit gemäß dem Oberbegriff von Anspruch 1.

Abschwächungsfilter dieser Art haben ein i.d.R. plattenförmiges Substrat, das aus einem für das Ultraviolettlichtlicht hinreichend transparenten Material besteht, sowie mindestens eine auf einer Oberfläche des Substrats aufgebrachte Filterschicht, die die gewünschte räumliche Verteilung der Transmission bewirkt. Solche Abschwächungsfilter werden beispielsweise zur Konstanthaltung der Bestrahlungsenergie in Dauerbestrahlungsversuchen mit Laserlicht verwendet, bei denen die Laserbeständigkeit bestimmter Proben, beispielsweise von Quarzglasproben, quantitativ erfasst werden soll. Abschwächungsfilter können auch zur definierten Änderung der Strahlungsenergie auf verschiedene Sollwerte bei der Bestrahlung von Proben, in kalorimetrischen Absorptionsmessungen oder bei anderen Verfahren zur Einstellung oder Regelung der Bestrahlungsenergie verwendet werden.

Eine Anwendung, bei der es besonders auf die exakte Einhaltung einer vorgegebenen Verteilung mit räumlich variierender Lichtdurchlässigkeit ankommt, ist bei der mikrolithographischen Herstellung von Halbleiterbauelementen oder anderen feinstrukturierten Bauteilen gegeben. Hierzu werden bekanntlich Waferstepper oder Waferscanner eingesetzt, bei denen u.a. die Forderung besteht, in der Bildebene eines Projektionsobjektives die Abweichungen der Beleuchtungsintensität von einer Gleichverteilung so gering wie möglich zu halten. Spezifikationen mit Abweichungen von weniger als ± 2% sind hier üblich. Diese Spezifikation wird bei gegebenem Beleuchtungssystem und gegebenem Projektionsobjektiv häufig nicht direkt erreicht. Zur Beseitigung einer nicht tolerierbaren Ungleichverteilung wird ein zusätzliches Abschwächungsfilter mit geeignet vorgegebenem Transmissionsprofil und vorzugsweise geringem Reflexionsgrad unmittelbar vor der Objektebene (Retikelebene) der Belichtungsanlage eingefügt, das Intensitätsunterschiede ausgleicht.

Bei den hier genannten Anwendungen sollen die Filter über den Anwendungszeitraum keine merkliche Degradation der optischen Eigenschaften aufweisen. Diese Forderung ist schwieriger zu erfüllen, je kürzer und damit energiereicher die verwendete Wellenlänge ist. Beispielsweise wird bei den letztgenannten Transmissionsfiltern zum Intensitätsausgleich bei Projektionsbelichtungsanlagen für die Lithographiewellenlängen 436nm, 365nm und 248nm Platin als absorbierendes Material für die Filterschicht verwendet. Platin weist jedoch beispielsweise bei 193nm oder darunter eine nicht tolerierbare Degradation der Transmission auf. Bei den oben genannten Dauerbestrahlversuchen werden bei Wellenlängen von 248nm oder darunter feste Graufilter z. B. mit absorbierenden Aluminiumschichten zur Lichtabschwächung bei schnell zu erledigenden Strahlprofilmessungen verwendet. Aluminiumschichten eignen sich jedoch nicht für den Dauereinsatz, da das Schichtmaterial bereits nach wenigen Minuten oxidiert.

Für Bestrahlungsversuche längerer Dauer sind Kantenfilter bestehend aus dielektrischen Schichten bekannt, die so dimensioniert sind, dass sich die verwendete Laserwellenlänge genau auf deren spektraler "Kante" befindet. Durch Änderung des Einfallswinkels über ein Verkippen des Substrats relativ zum Laserstrahl kann die effektive Weglänge der Strahlung im Schichtpaket und damit die Transmission gezielt verändert werden. Nachteilig ist hier, dass wegen des hohen spektralen Gradienten im Bereich der Kante die Transmission des Filters sehr empfindlich auf kleinste Veränderungen des Schichtsystems reagiert. So kann es nach gewisser Zeit zu lokalen Verstimmungen des Schichtsystems (z.B. spektraler Drift der Kante auf Grund von Temperaturänderungen oder Wasseraufnahme der Schichten, Aufwachsen von Verunreinigungen) kommen, so dass sich ein Strahlprofil einbrennt und der Filter nicht mehr als örtlich homogener Abschwächer geeignet ist. Derartige Schichten, deren Wirkung über Verkippung eingestellt wird, sind für die Anwendung als Transmissionsprofilfilter in Retikelnähe einer Projektionsbelichtungsanlage nicht geeignet.

Das Patent US 5,493,442 betrifft ein Interferenz-Bandpassfilter, das zur Transmission von UVA-Strahlung und zur Blockierung von UVB-Strahlung ausgelegt ist. Dazu wird Dünnschichtmaterial auf ein transparentes Substrat aufgebracht, wobei das Dünnschichtmaterial aus mindestens zwei Materialien zusammengesetzt ist. Das erste Material hat eine Absorptionskante oberhalb der gewünschten spektralen Position und das zweite Material hat eine Absorptionskante unterhalb der gewünschten spektralen Position der Absorptionskante des Bandpassfilters. Durch Einstellung des Mischungsverhältnisses zwischen den beiden Materialien kann die spektrale Lage der Absorptionskante genau eingestellt werden.

Das Patent GB 1,178,707 betrifft Glasartikel mit einer dielektrischen Mehrlagen-Antireflexbeschichtung, deren Brechungsindex höher als der Brechungsindex des Glasmaterials ist, wobei die Antireflexbeschichtung aus zwei Materialien zusammengesetzt ist, von denen eines Ultraviolettlicht absorbiert und das andere für UV-Licht transparent ist, aber den sichtbaren und infraroten Spektralbereich beeinflusst.

Die deutsche Auslegeschrift 1 157 002 betrifft einen UV-Blockfilter, der Ultraviolettlicht bei Wellenlängen unterhalb 360 nm bei geringer Schichtdicke weitgehend absorbiert.

Das Patent US 2,675,740 betrifft Blendschutzeinrichtungen, insbesondere Blendschutzbrillen zum Schutz von Personen gegen helles Sonnenlicht und Blendung. Bei einer Ausführungsform einer Sonnenbrille ist im oberen Teil des Brillensubstrates eine das sichtbare Licht absorbierende Schicht angebracht, deren Schichtdicke zum unteren Teil abnimmt, so dass die Lichtabsorption mit der Schichtdicke der Beschichtung abnimmt.

Der Erfindung liegt die Aufgabe zugrunde, einen dauerhaft laserbeständigen Abschwächungsfilter für Ultraviolettwellenlängen von weniger als ca. 200nm zu schaffen. Insbesondere soll der Abschwächungsfilter einfach und kostengünstig herstellbar sein und bei Bedarf wirksam entspiegelt werden können.

Zur Lösung dieser Aufgabe schlägt die Erfindung einen Abschwächungsfilter mit den Merkmalen von Anspruch 1 vor. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Ein erfindungsgemäßer Abschwächungsfilter der eingangs erwähnten Art zeichnet sich dadurch aus, dass die Filterschicht mindestens eine Schicht aus einem in dem vorgegebenen Wellenlängenbereich absorbierenden, dielektrischen Material aufweist und dass die Filterschicht eine über die Fläche des Abschwächungsfilters variierende Schichtdicke hat. Dabei wird ein wesentlicher Anteil der Filterwirkung durch Absorption der Strahlung innerhalb der Filterschicht erzielt. Das absorbierende dielektrische Material ist so ausgewählt, dass es bei der vorgegebenen Nutzwellenlänge einen so hohen Wirkungsquerschnitt hat, dass sich eine geforderte Dynamik der Transmission im wesentlichen über die Schichtdicke des absorbierenden dielektrischen Materials einstellen lässt. Die Schichtdicke variiert vorzugsweise kontinuierlich. Die transmissionsmindernde Wirkung durch Reflexion ist demgegenüber gering bis vernachlässigbar, was insbesondere für Anwendungen, bei denen Vermeidung von Falschlicht und/oder hohe integrale Transmissionsgrade der Filter angestrebt werden, sehr vorteilhaft ist.

Um über eine prozesstechnisch gut kontrollierbare Einstellung der Schichtdicke bzw. eines Schichtdickenverlaufes eine gewünschte Transmissionscharakteristik einstellen zu können, hat es sich als vorteilhaft herausgestellt, wenn das dielektrische Material im vorgegebenen Wellenlängenbereich einen Absorptionskoeffizienten k von mehr als 0,5 aufweist, wobei Absorptionskoeffizienten k >1 bevorzugt sind.

Im Hinblick auf die gewünschte Laserbeständigkeit ist bei bevorzugten Ausführungsformen vorgesehen, dass das dielektrische Material der Filterschicht ein Metalloxid aufweist oder im wesentlichen aus einem Metalloxid besteht. Für Laserwellenlängen im Bereich von ca. 193nm haben sich Filterschichten auf Basis von Tantalpentoxid (Ta₂O₅) besonders bewährt. Gegebenenfalls kann auch Hafniumoxid (HfO₂) als Schichtmaterial verwendet werden. Für kürzere Wellenlängen, beispielsweise um ca. 157nm, kann auch Aluminiumoxid (Al₂O₃) geeignet sein. Auch Mischungen mehrerer dielektrischer Materialien sind möglich.

Die Verwendung von Tantaloxid oder Tantalpentoxid in optischen Filtern, insbesondere in Interferenzfiltern, ist an sich bekannt. Jedoch wurde Tantaloxid bisher vorwiegend in Antireflexbeschichtungen für den sichtbaren Wellenlängenbereich alleine oder gemischt mit anderen Stoffen verwendet (siehe z.B. DE 690 21 420 C2 oder DE 30 09 533 C2). Häufig wird Tantaloxid auch in Beschichtungen verwendet, die eine hohe Transmission im sichtbaren und eine hohe Reflexion im Infrarotbereich haben sollen (siehe z.B. DE 38 25 671 und DE 692 08 712). Bei diesen Anwendungen ist die Absorption von Tantaloxid vernachlässigbar.

Die Verwendung eines stark absorbierenden, dielektrischen Materials, wie Tantalpentoxid, für die Filterschicht macht es möglich, dass mit maximalen Schichtdicken von ca. 10nm, 5nm oder darunter das gesamte Spektrum gewünschter Transmissionen von nahezu vollständiger Transmission (geringe Schichtdicke oder Substratbereiche ohne Filterschicht) bis zu starker Abschwächung der auftreffenden Strahlung um ein oder mehrere Prozent abdeckbar ist.

Geringe Schichtdicken der Filterschicht, beispielsweise von maximal 1nm bis 2nm, bieten als weiteren Vorteil, dass sich derartige Filterschichten mit einfach aufgebauten Antireflexschichten wirksam entspiegeln lassen. Insbesondere ist eine homogene Entspiegelung, d.h. eine Entspiegelung mit einer über die gesamte Filterfläche nahezu gleichmäßigen Entspiegelungswirkung durch eine Antireflexschicht mit weitgehend gleichförmiger Dicke möglich, da örtliche Dickegradienten der absorbierenden Schicht in der Regel so klein sind, dass dies nur einen vernachlässigbaren Einfluß auf die lokalen Inzidenzwinkel auf der Beschichtungsoberfläche hat. Diese liegen dadurch in der Größenordnung der Inzidenzwinkel auf der Substratoberfläche, welche in der Regel weniger als 20° betragen. Die Inzidenzwinkel auf Beschichtungsoberfläche und Substratoberfläche sind also weitgehend identisch, auch bei relativ kleinen Absorptionskoeffizienten k des Schichtmaterials. Eine wirksame Entspiegelungsschicht muß also nicht breitbandig über einen großen Inzidenzwinkelbereich wirken. Entsprechend können die bevorzugten dünnen Filterschichten mit relativ einfach aufgebauten Antireflexschichten wirksam entspiegelt werden.

Eine dielektrische Antireflexbeschichtung hat vorzugsweise eine einzige Antireflexschicht oder ein einziges Wechselschichtpaket mit einer Schicht aus einem hochbrechenden und einer weiteren Schicht aus einem niedrigbrechenden dielektrischen Material.

Bei einigen Ausführungsformen ist vorgesehen, dass an der der Filterschicht abgewandten Oberfläche des Substrats eine Antireflexbeschichtung angebracht ist. Diese kann ebenfalls ein- oder mehrlagig sein. Die weitgehende Entspiegelung sowohl der Lichteintrittsseite als auch der Lichtaustrittsseite des Abschwächungsfilters erlaubt einen möglichst gering (integralen) Intensitätsverlust. Dies ist besonders wichtig bei den eingangs erwähnten Abschwächungsfiltern zur Beeinflussung der Beleuchtungsintensitätsverteilung bei Projektionsobjektiven, da hohe Beleuchtungsintensitäten einen hohen Waferdurchsatz und damit eine kostengünstige Halbleiterchipfertigung erlauben.

Die vorstehenden und weiteren Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Es zeigen:
- Fig. 1: einen Schnitt durch einen Bereich einer Ausführungsform eines erfindungsgemäßen Abschwächungsfilters zusammen mit einem zugehörigen schematischen Diagramm der relativen Transmission des Abschwächungsfilters als Funktion des Ortes;
- Fig. 2: ein Diagramm mit Werten für die relative Transmission Tᵣₑₗ und die absolute Transmission T_{abs} als Funktion des radialen Ortes bei einer Ausführungsform eines Abschwächungsfilters mit rotationssymmetrischer Transmissionscharakteristik;
- Fig. 3: ein Vergleichsdiagramm für die Dicken d_{T} einer Filterschicht aus Tantalpentoxid und d_{H} für eine Filterschicht aus Hafniumdioxid (HfO₂), die erforderlich sind, um die in Fig. 2 gezeigte Transmissionscharakteristik zu erzielen, sowie dazugehörige vorderseitige Reflexionsgrade R_{H} für Hafniumdioxid und R_{T} für Tantalpentoxid, jeweils bei Filterschichten ohne Entspiegelungsschicht;
- Fig. 4: berechnete, erforderliche Profile der Absoluttransmission T_{abs} von Filterschichten aus Tantalpentoxid und Hafniumdioxid bei einer Entspiegelung der Filterschichten mit einer Entspiegelungsschicht homogener Dicke; und
- Fig. 5: eine dem Diagramm in Fig. 3 entsprechende Darstellung von Dicken und Reflexionsgraden für Filterschichten aus Tantalpentoxid und Hafniumdioxid, wobei auf der jeweiligen Filterschicht eine optimierte Antireflexbeschichtung homogener Dicke vorgesehen ist.

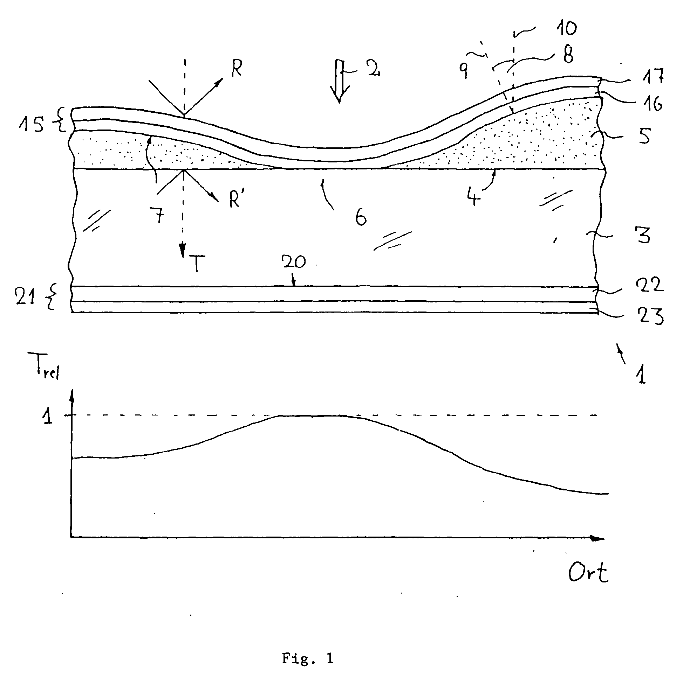

In Fig. 1 ist im oberen Teil ein senkrechter, schematischer Schnitt durch einen Ausschnitt einer Ausführungsform eines erfindungsgemäßen Abschwächungsfilters 1 gezeigt. Er dient zur definierten Abschwächung der Lichtintensität von Ultraviolettlicht 2 gemäß einer vorgebbaren räumlichen Verteilung der Lichtdurchlässigkeit und ist für eine Arbeitswellenlänge von ca. 193nm ausgelegt. Der Filter hat ein Substrat 3 in Form einer dünnen, planparallelen Platte z. B. aus kristallinem Calciumfluorid oder Quarz, das bei der Arbeitswellenlänge praktisch keine Absorption aufweist. Auf der ebenen, eintrittsseitigen Oberfläche 4 des Substrats ist eine absorbierende Filterschicht 5 aufgedampft, die als Verlaufsschicht mit einer über die Filterfläche lokal variierenden Schichtdicke mit kontinuierlicher Schichtdickenänderung ausgebildet ist. Dabei kann die Schichtdicke bereichsweise bis auf den Wert 0 abfallen, so dass, wie im gezeigten Beispiel, auch von der Filterschicht nicht bedeckte Bereiche 6 vorhanden sein können. Abweichend von der schematischen Darstellung in der Zeichnungsfigur kann die Schichtdickenverteilung bzw. das Transmissionsprofil z. B. rotationssymmetrisch sein.

Die Filterschicht ist mit einer maximalen Schichtdicke von weniger als 2nm sehr dünn, so dass auch in Bereichen von Schichtdickegradienten die eintrittsseitige Oberfläche 6 der Filterschicht in Bezug auf das eintreffende Licht 2 nur geringfügig verkippt ist. Typischerweise liegt der maximale Inzidenzwinkel des auf die Schicht 5 fallenden Lichts, d.h. der Winkel 8 zwischen der lokalen Oberflächennormalen 9 und der Einfallsrichtung 10 des Ultraviolettlichts 2, im Bereich der Inzidenzwinkel auf die Substratoberfläche 4, in der Regel also unterhalb von 10° bis 20°.

Die Filterschicht 5 besteht im wesentlichen aus einem gegenüber dem verwendeten Ultraviolettlicht stabilen, absorbierenden dielektrischen Material, bei der gezeigten Ausführungsform aus Tantalpentoxid (Ta₂O₅). Dieses Material hat sich als im Bereich der Arbeitswellenlänge äußerst langzeitstabiles Dielektrikum herausgestellt, ist bei der bevorzugten Beschichtung mittels PVD (Physikal Vapor Deposition) sehr gut handhabbar und hat für die vorliegende Anwendung sehr günstige optische Eigenschaften. Das gegenüber dem Substratmaterial Calciumfluorid (Brechungsindex n=1,55) hochbrechende Material (Brechungsindex n=1,95) hat einen hohen Absorptionskoeffizienten k=1,16, was dazu führt, dass dieses Metalloxid bei der Arbeitswellenlänge einen hohen Wirkungsquerschnitt der Absorption für das verwendet UV-Licht 2 hat. Dadurch ist über geeignete Variation der Schichtdicke der Filterschicht 5 jede gewünschte Dynamik der Transmission von maximaler Transmission (in Bereichen 6 ohne Filterschicht) bis zu teilweiser oder vollständiger Blockierung des auftreffenden Lichtes 2 erzielbar. Bei der hier betrachteten Anwendung sind jedoch nur relativ geringe lokale Schwankungen der relativen Transmission (Verhältnis zwischen tatsächlichem lokalen Transmissionsgrad und vollständiger Transmission) im Bereich weniger Prozent vorgesehen. Beispielsweise ist für relative Transmissionen zwischen ca. 0,87 und 1 eine Schichtdickenvariation zwischen ca. 1,5nm und 0nm erforderlich.

Ein besonderer Vorteil erfindungsgemäßer Abschwächungsfilter besteht darin, dass aufgrund der sehr geringen Schichtdicken der Filterschicht 5 eine homogene, d.h. über den gesamten Filterquerschnitt gleichmäßig wirksame Entspiegelung der Filter besonders einfach möglich ist. Eine Entspiegelung des Abschwächungsfilters ist i.d.R. zur Vermeidung von Falschlicht und Intensitätsverlust erforderlich. Dies ist beispielsweise bei den eingangs erwähnten Ausgleichsfiltern der Fall, mit denen Abweichungen der Beleuchtungsintensität bei mikrolithographischen Projektionsanlagen von einer Gleichverteilung minimiert werden sollen. Dort sind Filter mit geeignetem, vorgebbarem Transmissionsprofil aber geringem Reflexionsgrad erforderlich, um gleichzeitig Falschlicht und eine globale Verminderung der Beleuchtungsintensität und eine damit verbundene Verlangsamung von Belichtungsprozessen zu vermeiden.

Zur eintrittsseitigen Entspiegelung des Abschwächungsfilters ist auf der eintrittsseitigen Oberfläche 6 der Filterschicht 5 eine zweilagige, dielektrische Antireflexbeschichtung 15 ebenfalls durch Vakuumverdampfen aufgebracht. Sie besteht aus einem Wechselschichtpaket mit einer auf der Filterschicht 5 aufgebrachten Schicht 16 aus hochbrechendem, dielektrischen Material und einer darauf aufgebrachten Schicht 17 aus relativ dazu niedrigbrechendem dielektrischem Material. Im Beispiel wird als niederbrechendes Material Magnesiumfluorid (MgF₂) mit einem Brechungsindex n=1,4 und als hochbrechendes Material Aluminiumoxid (Al₂O₃) mit einem Brechungsindex n=1,69 verwendet. Die Schichten 16, 17 der Antireflexbeschichtung 15 haben über den gesamten Querschnitt der Filterfläche im wesentlichen gleichförmige Schichtdicken von ca. 32nm (MgF₂) bzw. ca. 60nm (Al₂O₃) und sind dadurch besonders einfach auf einem weitgehend ebenen Substrat aufzubringen. Neben der optischen Wirkung als Entspiegelungsschicht können sie auch als Schutzschicht für die darunter liegende, sehr dünne Filterschicht 5 gegen schädliche Umwelteinflüsse dienen. Die Antireflexbeschichtung 15 bewirkt trotz des einfachen Aufbaus aus nur zwei Schichten 16, 17 und einer damit verbundenen Schmalbandigkeit bezüglich Inzidenzwinkelvariationen eine über die gesamte Filterfläche gleichmäßig starke Reflexionsminderung bzw. Transmissionserhöhung, da aufgrund der sehr geringen Schichtdicken der Filterschicht 5 und der damit verbundenen flachen Oberflächengradienten der Außenfläche 6 der Filterschicht nur kleine Inzidenzwinkel 8 auftreten.

Es wäre auch möglich, für jeden Ort der Filterschicht, d. h. für jede lokale Schichtdicke, die Schichtdicken einer viellagigen Antireflexbeschichtung mit mehr als zwei Einzelschichten zu bestimmen. Im allgemeinen Fall würden sich jedoch dadurch über den Ort variierenden Schichtdicken der Einzelschichten ergeben, die zudem im allgemeinen für jede Einzelschicht einen anderen Verlauf haben würden. Es müsste also zusätzlich zu dem Ortsprofil der absorbierenden Filterschicht eine der Anzahl der Einzelschichten entsprechende Anzahl von Schichtprofilen berechnet und hergestellt werden. Eine solche Entspiegelung ist nur mit großem technischem Aufwand realisierbar. Die bevorzugte Zweilagenschicht mit konstanter Schichtdicke ist demgegenüber leicht zu fertigen.

Die hier erläuterten Entspiegelungen auf der Vorderseite 7 der Filterschicht wirken sich im wesentlichen auf die vorderseitige Reflexion (Reflexionsgrad R in Fig. 1) aus. Durch geeignete ein- oder mehrlagige Schichten zwischen Substrat 3 und der Filterschicht 5 ist auch eine hinreichende Entspiegelung der rückseitigen Reflexion (Reflexionsgrad R' in Fig. 1) möglich.

Zur weiteren, gleichmäßig über die gesamte Filterfläche wirkenden Verbesserung der Transmission des Abschwächungfilters ist auch auf der austrittsseitigen Oberfläche 20 des Substrats 3 eine zweilagige Antireflexbeschichtung 21 aufgedampft, die bei anderen Ausführungsformen auch entfallen kann. Die Antireflexschicht 21 hat im wesentlichen den gleichen Aufbau wie die Antireflexschicht 15 mit einer substratseitigen Schicht 22 aus Aluminiumoxid und einer außenliegenden Schicht 23 aus Magnesiumfluorid. Die Beschichtung 21 kann auch aus mehr als zwei Einzelschichten bestehen.

Im folgenden wird anhand von Ausführungsbeispielen für Abschwächungsfilter mit rotationssymmetrischen Transmissionsprofilen ein Vergleich zwischen verschieden gut geeigneten, dielektrischen Filterschichtmaterialien sowie ein Vergleich zwischen entspiegelten und nicht entspiegelten Filterschichten erläutert. Alle dargestellten Werte für Transmissionsgrade T, Reflexionsgrade R und Schichtdicken d sind für eine Arbeitswellenlänge von 193nm berechnet. Dabei wurde ein senkrechter Lichteinfall (Einfallswinkel 0°) angenommen und die Wirkung der nicht mit einer absorbierenden Schicht belegten zweiten Seite wurde vernachlässigt. Als Substratmaterial wurde Quarzglas angenommen, das bei der Arbeitswellenlänge einen Brechungsindex n=1,55 und einen verschwindenden Absorptionskoeffizienten k hat.

In Fig. 1 ist ein vorgegebenes, rotationssymmetrisches Sollprofil der relativen Transmission Tᵣₑₗ (durchgezogene Linie) und der entsprechenden, erforderlichen absoluten Transmission T_{abs} (gestrichelte Linie) bei Beschichtung ohne Entspiegelung gezeigt, wobei sich die Absoluttransmission aus dem Produkt der relativen Transmission und der unbeschichteten Transmission (0,9535) berechnet. Der beispielhaft gezeigte Transmissionshub (Differenz zwischen Minimal- und Maximalwert) von ca. 40% ist relativ hoch. Die "Graufilter" für die Optiken der lithographischen Chipherstellung haben in der Regel einen deutlich geringeren "Hub", z. B. bis maximal 15%. Sie ermöglichen dadurch eine noch bessere "einfache Entspiegelung" als in den hier erläuterten Beispielen.

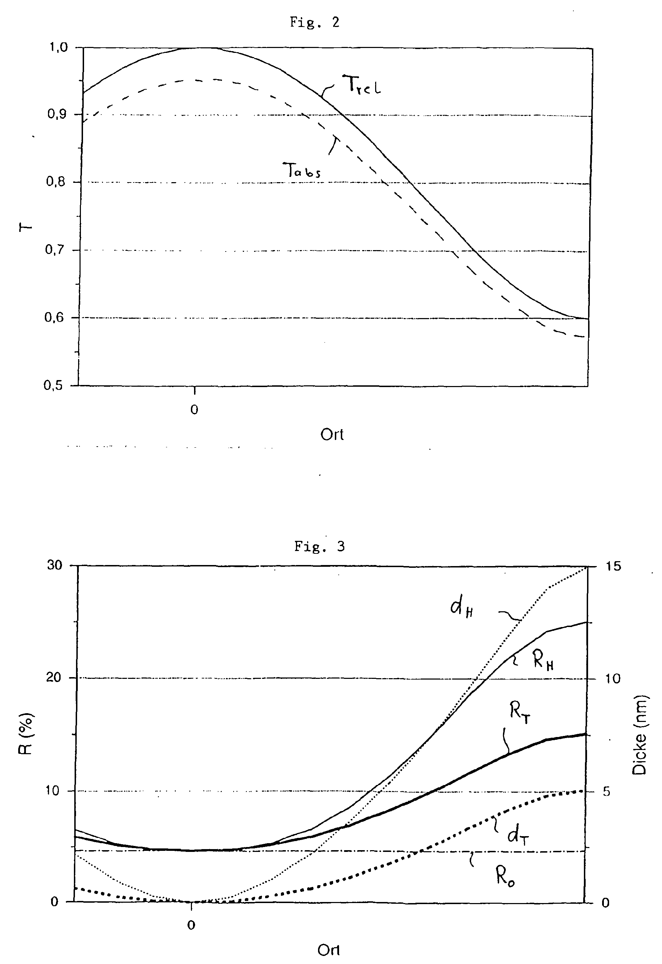

Die Figuren 3 bis 5 zeigen eine Gegenüberstellung der optischen Eigenschaften von Abschwächungsfiltern, bei denen die Filterschicht im einen Fall auf Tantalpentoxid (Index T) und im anderen Fall aus Hafniumdioxid (Index H) besteht. Für Tantalpentoxid wird ein reeller Brechungsindex n=1,95 und ein Absorptionskoeffizient k=1,16 zugrundegelegt, für das höher brechende Hafniumdioxid ein reeller Brechungsindex n=2,3 und ein deutlich geringerer Absorptionskoeffizient k=0,25. Der Vergleich zeigt, dass eine einfache Entspiegelung mit einer Antireflexbeschichtung konstanter Schichtdicke für das stärker absorbierende Material (Tantalpentoxid) deutlich einfacher und wirksamer ist als für das ebenfalls bei 193nm als Filtermaterial verwendbare Hafniumdioxid.

Fig. 3 zeigt die für die Erzielung des in Fig. 2 gezeigten Transmissionsprofils erforderlichen Schichtdicken d_{H} und d_{T} und die entsprechenden vorderseitigen Reflexionsgrade R_{H} bzw. R_{T}. Es ist unmittelbar erkennbar, dass bei dem stärker absorbierenden Tantalpentoxid geringere Schichtdicken ausreichen, um vergleichsweise höhere Effektivität der Reflexminderung zu erzielen.

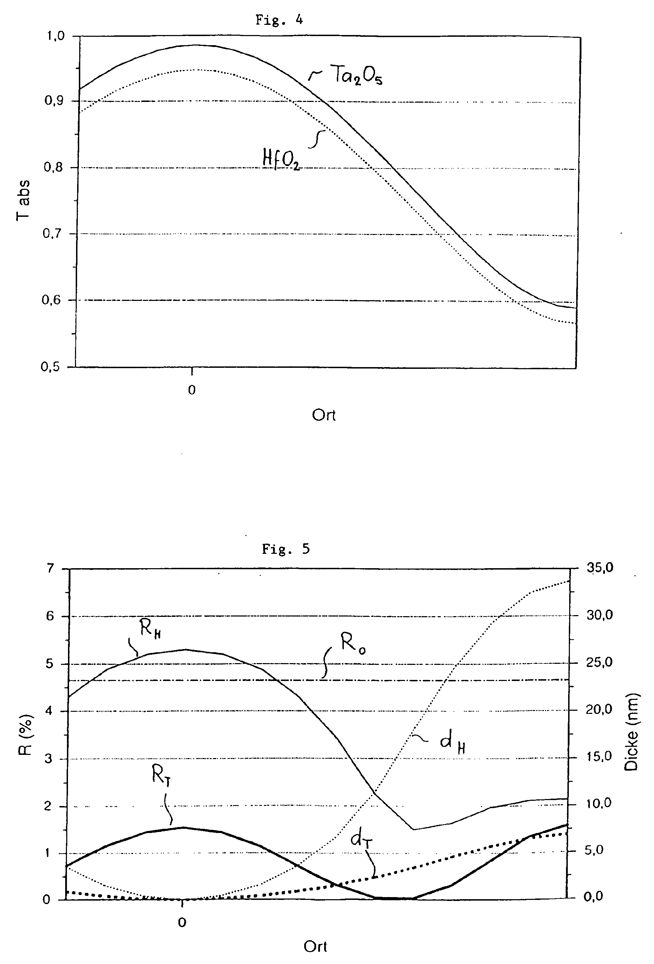

Fig. 4 zeigt die erforderlichen Profile der Absoluttransmission für Hafniumdioxid (gestrichelte Linie) und Tantalpentoxid (durchgezogene Linie) zur Erreichung des in Fig. 2 gezeigten Transmissionsprofiles für den Fall, dass auf der dielektrischen Filterschicht jeweils eine "einfache" Antireflexbeschichtung, d. h. eine zweilagige Antireflexbeschichtung konstanter Gesamtschichtdicke und konstanter Schichtdicke der Einzelschichten, aufgebracht ist. In beiden Fällen wurde die Entspiegelung für die Vermeidung von Falschlicht optimiert, d. h. es wurde eine möglichst örtlich homogene Entspiegelung eingestellt. Es ist zu erkennen, dass bei Verwendung von Tantalpentoxid im gesamten Dickenbereich eine bessere Transmission erzielbar ist als mit Hafniumdioxid. Letzteres Material führt insbesondere deshalb zu einem Intensitätsverlust, da die optimierte Entspiegelung bei verschwindender Schichtdicke der dielektrischen, absorbierenden Filterschicht schlechter wird.

Fig. 5 zeigt analog zu Fig. 3 Schichtdicken und die jeweils dadurch erzielbaren Reflexionsgrade einer Filterschicht mit Tantalpentoxid und mit Hafniumdioxid. Im Unterschied zu Fig. 3 ist hier jedoch auf der Filterschicht eine "einfache" Entspiegelung, d. h. eine zweilagige Antireflexbeschichtung homogener Dicke, auf die Filterschicht aufgebracht. Der Vergleich zwischen Fig. 3 und Fig. 5 zeigt zunächst, dass die Schichtdicken d_{T} und d_{H} für Tantalpentoxid und Hafniumdioxid zur Erzielung des gleichen Transmissionsprofils deutlich größer sind als bei unbeschichteter Filterschicht (Fig. 3). Dies ist dadurch erklärbar, dass eine Entspiegelung einer absorbierenden Schicht die Transmission erhöht und dies durch höhere Schichtdicken der absorbierenden Schicht kompensiert werden muß, um auf die vorgegebene Gesamttransmission zu gelangen. Weiterhin ist erkennbar, dass bei moderaten Schichtdicken der Tantalpentoxidschicht zwischen 0nm und 7nm der Reflexionsgrad mit Entspiegelung (R_{T}) des Filters über den gesamten Schichtdickenbereich deutlich unterhalb 2% gehalten werden kann und bei Schichtdicken um ca. 3 nm eine fast vollständige Reflexminderung erzielbar ist. Bei Verwendung von Hafniumdioxid dagegen sind niedrige Reflexionsgrade um ca. 2% insbesondere bei Schichtdicken oberhalb von ca. 10nm erzielbar. Im Bereich niedriger Schichtdicken kann der Reflexionsgrad der "entspiegelten" Filterschicht (R_{H}) sogar den Reflexionsgrad R₀ der unbeschichteten Seite übersteigen. Die Antireflexbeschichtung besteht in beiden Fällen aus einer Magnesiumfluorid/Aluminiumoxid-Wechselschicht mit Schichtdicken aus ca. 30nm und ca. 60nm, im Falle von Tantalpentoxid bzw. ca. 51 nm und ca. 36nm im Falle von Hafniumoxid.

Der Vergleich zeigt, dass Hafniumdioxid zwar als absorbierendes Dielektrikum für die Filterschicht 5 bei 193nm grundsätzlich geeignet ist. Günstiger sind jedoch Materialien mit höherem Absorptionskoeffizienten, beispielsweise Tantalpentoxid mit k=1,16, da deutlich geringere Schichtdicken verwendbar sind und die dünnen Filterschichten mit "einfachen" Antireflexbeschichtungen sehr wirksam entspiegelt werden können.

Die Erfindung wurde hier anhand von Ausführungsbeispielen erläutert, jedoch sind im Rahmen der Erfindung zahlreiche Varianten möglich. Beispielsweise kann vorgesehen sein, dass das vorgegebene Transmis-, sionsprofil nicht über eine vorzugsweise kontinuierlich variierende Schichtdicke der Filterschicht 5 erzeugt wird, sondern dadurch, dass die Filterschicht durch eine Rasteranordnung optisch dichter, beispielsweise kreisrunder Beschichtungszonen aufgebaut ist, deren Durchmesser und/oder Abstand so bemessen ist, dass sich für jeden Oberflächenbereich des Filters der für diesen Bereich gewünschte Transmissionsgrad ergibt (digitaler Filter). Das Substrat 3 kann aus jedem geeigneten, bei der Arbeitswellenlänge hinreichend transparenten Material bestehen. Für Arbeitswellenlängen um 193nm sind daher statt Calciumfluorid auch Magnesiumfluorid oder synthetisches Quarzglas möglich. Für niedrige Wellenlängen, beispielsweise um 157nm, können ebenfalls Calciumfluorid oder Magnesiumfluorid, gegebenenfalls auch Bariumfluorid als Substratmaterial verwendet werden. Als dielektrisches, absorbierendes Material für die Filterschicht 5 kann jedes Material geeignet sein, das bei der gewünschten Arbeitswellenlänge ausreichend starke Absorption aufweist, was idealerweise Absorptionskoeffizienten k>1 voraussetzt, um die Lichtabschwächung mit relativ geringen Schichtdicken zu erzielen. So kann beispielsweise für 157nm Aluminiumoxid als Filterschichtmaterial verwendet werden.

## Patentansprüche

1. Abschwächungsfilter zur definierten Abschwächung der Lichtintensität von transmittiertem Ultraviolettlicht aus einem vorgegebenen Wellenlängenbereich gemäß einer vorgebbaren räumlichen Verteilung der Lichtdurchlässigkeit, der Abschwächungsfilter mit einem Substrat (3) aus einem lichtdurchlässigen Material und mindestens einer auf einer Oberfläche (4) des Substrats aufgebrachten Filterschicht (5), **dadurch gekennzeichnet, dass** die Filterschicht mindestens eine Schicht aus einem im vorgegebenen Wellenlängenbereich absorbierenden, dielektrischen Material mit einer über die Fläche des Abschwächungsfilters variierenden Schichtdicke aufweist.

2. Abschwächungsfilter nach Anspruch 1, **dadurch gekennzeichnet, dass** die Schichtdicke kontinuierlich variiert.

3. Abschwächungsfilter nach Anspruch 1 oder 2, **dadurch gekennzeichnet, dass** das dielektrische Material der Filterschicht (5) im vorgegebenen Wellenlängenbereich einen Absorptionskoeffizienten k größer 0,5 aufweist, wobei der Absorptionskoeffizient vorzugsweise größer als 1 ist.

4. Abschwächungsfilter nach einem der vorhergehenden Ansprüche, **dadurch gekennzeichnet, dass** das dielektrische Material der Filterschicht (5) mindestens ein Metalloxid aufweist.

5. Abschwächungsfilter nach einem der vorhergehenden Ansprüche, **dadurch gekennzeichnet, dass** das dielektrische Material Tantaloxid aufweist, wobei es vorzugsweise im wesentlichen aus Tantaloxid besteht.

6. Abschwächungsfilter nach einem der vorhergehenden Ansprüche, **dadurch gekennzeichnet, daß** die Filterschicht (5) eine maximale Schichtdicke von weniger als 10nm hat, wobei die maximale Schichtdicke vorzugsweise weniger als 5nm, insbesondere weniger als ca. 2nm beträgt.

7. Abschwächungsfilter nach einem der vorhergehenden Ansprüche, **dadurch gekennzeichnet, dass** auf der Filterschicht (5) eine dielektrische Antireflexbeschichtung (15) angeordnet ist.

8. Abschwächungsfilter nach Anspruch 7, **dadurch gekennzeichnet, daß** die Antireflexbeschichtung (15) über die gesamte Filterfläche eine im wesentlichen gleichförmige Schichtdicke hat, wobei vorzugsweise die Antireflexbeschichtung (15) mehrere Einzelschichten (16, 17) aufweist, die jeweils eine im wesentlichen gleichförmige Schichtdicke haben.

9. Abschwächungsfilter nach Anspruch 7 oder 8, **dadurch gekennzeichnet, dass** die Antireflexbeschichtung (15) ein Wechselschichtpaket mit einer Schicht (16) aus hochbrechendem dielektrischen Material und einer Schicht (17) aus niedrigbrechendem dielektrischen Material aufweist, wobei vorzugsweise eine Schicht (16) aus hochbrechendem dielektrischen Material direkt auf die Filterschicht (5) aufgebracht ist.

10. Abschwächungsfilter nach Anspruch 9, **dadurch gekennzeichnet, dass** als niedrigbrechendes dielektrisches Material Magnesiumfluorid (MgF₂) verwendet wird und/oder dass als hochbrechendes dielektrisches Material Aluminiumoxid (Al₂O₃) verwendet wird.

11. Abschwächungsfilter nach einem der vorhergehenden Ansprüche, **dadurch gekennzeichnet, dass** auf der der Filterschicht (5) abgewandten Oberfläche (20) des Substrats eine Antireflexbeschichtung (21) aufgebracht ist.

12. Abschwächungsfilter nach einem der vorhergehenden Ansprüche, **dadurch gekennzeichnet, dass** zwischen dem Substrat (3) und der Filterschicht (5) eine Antireflexschicht angeordnet ist.

13. Abschwächungsfilter nach einem der vorhergehenden Ansprüche, **dadurch gekennzeichnet, dass** es für Ultraviolettlicht aus einem Wellenlängenbereich von weniger als ca. 200nm ausgelegt ist, insbesondere für ca. 193nm.

## Claims

1. Attenuation filter for the defined attenuation of the light intensity of transmitted ultraviolet light from a predetermined wavelength region in accordance with a predeterminable spatial distribution of the light transmission, the attenuation filter having a substrate (3) made from a light-transmitting material and at least one filter layer (5) which has been applied to a surface (4) of the substrate, **characterized in that** the filter layer has at least one layer of a dielectric material which absorbs in the predetermined wavelength region and has a layer thickness which varies over the surface of the attenuation filter.

2. Attenuation filter according to Claim 1, **characterized in that** the layer thickness varies continuously.

3. Attenuation filter according to Claim 1 or 2, **characterized in that** the dielectric material of the filter layer (5), in the predetermined wavelength region, has an absorption coefficient k of greater than 0.5, the absorption coefficient preferably being greater than 1.

4. Attenuation filter according to one of the preceding claims, **characterized in that** the dielectric material of the filter layer (5) includes at least one metal oxide.

5. Attenuation filter according to one of the preceding claims, **characterized in that** the dielectric material includes tantalum oxide and preferably substantially consists of tantalum oxide.

6. Attenuation filter according to one of the preceding claims, **characterized in that** the filter layer (5) has a maximum layer thickness of less than 10 nm, the maximum layer thickness preferably being less than 5 nm, in particular less than approx. 2 nm.

7. Attenuation filter according to one of the preceding claims, **characterized in that** a dielectric antireflection coating (15) is arranged on the filter layer (5).

8. Attenuation filter according to Claim 7, **characterized in that** the antireflection coating (15) has a substantially uniform layer thickness over the entire filter surface, the antireflection coating (15) preferably having a plurality of individual layers (16, 17) which each have a substantially uniform layer thickness.

9. Attenuation filter according to Claim 7 or 8, **characterized in that** the antireflection coating (15) comprises an alternating layer assembly with a layer (16) of dielectric material with a high refractive index and a layer (17) of dielectric material with a low refractive index, a layer (16) of dielectric material with a high refractive index preferably being applied direct to the filter layer (5).

10. Attenuation filter according to Claim 9, **characterized in that** the dielectric material with a low refractive index used is magnesium fluoride (MgF₂) and/or **in that** the dielectric material with a high refractive index used is aluminium oxide (Al₂O₃).

11. Attenuation filter according to one of the preceding claims, **characterized in that** an antireflection coating (21) is applied to that surface (20) of the substrate which faces away from the filter layer (5).

12. Attenuation filter according to one of the preceding claims, **characterized in that** an antireflection coating is arranged between the substrate (3) and the filter layer (5).

13. Attenuation filter according to one of the preceding claims, **characterized in that** it is designed for ultraviolet light from a wavelength region of less than approx. 200 nm, in particular for approx. 193 nm.

## Revendications

1. Filtre d'affaiblissement pour l'affaiblissement défini de l'intensité lumineuse de lumière ultraviolette transmise d'une plage de longueur d'onde prescrite suivant une répartition spatiale prescriptible de la transparence à la lumière des filtres d'affaiblissement, comportant un substrat (3) en matière transparente à la lumière et au moins une couche de filtrage (5) appliquée sur la surface (4) du substrat, **caractérisé en ce que** la couche de filtrage inclut au moins une couche de matière diélectrique absorbante dans la plage de longueur d'onde prescrite et d'une épaisseur de couche variable sur la surface du filtre d'affaiblissement.

2. Filtre d'affaiblissement selon la revendication 1, **caractérisé en ce que** l'épaisseur de couche varie en continu.

3. Filtre d'affaiblissement selon la revendication 1 ou 2, **caractérisé en ce que** la matière diélectrique de la couche de filtrage (5) présente, dans la plage de longueur d'onde prescrite, un coefficient d'absorption k supérieur à 0,5, ce coefficient d'absorption étant de préférence supérieur à 1.

4. Filtre d'affaiblissement selon une des revendications précédentes, **caractérisé en ce que** la matière diélectrique de la couche de filtrage (5) contient au moins un oxyde métallique.

5. Filtre d'affaiblissement selon une des revendications précédentes, **caractérisé en ce que** la matière diélectrique contient de l'oxyde de tantale, sachant qu'elle est composée de préférence essentiellement d'oxyde de tantale.

6. Filtre d'affaiblissement selon une des revendications précédentes, **caractérisé en ce que** la couche de filtrage (5) a une épaisseur maximale de couche de moins de 10 nm, sachant que l'épaisseur de couche maximale est de préférence inférieure à 5 nm, notamment inférieure à environ 2 nm.

7. Filtre d'affaiblissement selon une des revendications précédentes, **caractérisé en ce que**, sur la couche de filtrage (5), est disposé un revêtement diélectrique antireflet (15).

8. Filtre d'affaiblissement selon la revendication 7, **caractérisé en ce que** le revêtement antireflet (15) a sur toute la surface de filtrage une épaisseur de couche sensiblement uniforme, tandis que le revêtement antireflet (15) comporte de préférence plusieurs couches distinctes (16, 17) qui ont respectivement une épaisseur de couche sensiblement uniforme.

9. Filtre d'affaiblissement selon la revendication 7 ou 8, **caractérisé en ce que** le revêtement antireflet (15) présente un ensemble alternatif de couches avec une couche (16) en matière diélectrique à fort indice de réfraction et une couche (17) en matière diélectrique à faible indice de réfraction, une couche (16) en matière diélectrique à fort indice de réfraction étant appliquée de préférence directement sur la couche de filtrage (5).

10. Filtre d'affaiblissement selon la revendication 9, **caractérisé en ce qu'**on utilise comme matière diélectrique à faible indice de réfraction du fluor de magnésium (MgF₂) et/ou comme matière diélectrique à fort indice de réfraction de l'oxyde d'aluminium (Al₂O₃).

11. Filtre d'affaiblissement selon une des revendications précédentes, **caractérisé en ce que**, sur la surface (20) détournée de la couche de filtrage (5) du substrat, est appliqué un revêtement antireflet (21).

12. Filtre d'affaiblissement selon une des revendications précédentes, **caractérisé en ce qu'**entre le substrat (3) et la couche de filtrage (5), est disposée une couche antireflet.

13. Filtre d'affaiblissement selon une des revendications précédentes, **caractérisé en ce qu'**il est conçu pour de la lumière ultraviolette d'une plage de longueur d'onde inférieure à environ 200 nm, notamment pour environ 193 nm.
